Europäisches Patentamt

European Patent Office

Office européen des brevets

(19)

(11) Numéro de publication: **0 233 426**
**A1**

(12) **DEMANDE DE BREVET EUROPEEN**

(21) Numéro de dépôt: **86402819.6**

(22) Date de dépôt: **16.12.86**

(51) Int. Cl.⁴: **C22C 38/44** , C22C 38/60 , G21C 3/06

(30) Priorité: **17.12.85 FR 8518699**

(43) Date de publication de la demande:
**26.08.87 Bulletin 87/35**

(84) Etats contractants désignés:
**BE DE FR GB IT NL SE**

(71) Demandeur: **COMMISSARIAT A L'ENERGIE ATOMIQUE**
**31/33, rue de la Fédération**
**F-75015 Paris(FR)**

(72) Inventeur: **Dubuisson, Philippe**
**22 Avenue Emile Zola**
**F-75015 Paris(FR)**
Inventeur: **Levy, Viviane**
**23, rue du Laos**
**F-75015 Paris(FR)**
Inventeur: **Seran, Jean-Louis**
**13, rue du Parc**
**F-92190 Meudon(FR)**

(74) Mandataire: **Mongrédien, André et al**
**c/o BREVATOME 25, rue de Ponthieu**
**F-75008 Paris(FR)**

(54) **Acier inoxydable austénitique utilisable en particulier comme matériau de structure de coeur ou de gainage dans les réacteurs nucléaires.**

(57) L'invention a pour objet des aciers inoxydables austénitiques résistant au gonflement sous irradiation.

Ces aciers comprennent au moins un élément additionnel choisi parmi l'étain, le germanium et l'antimoine à une teneur totale allant de 0,05 % en poids à 1 % en poids.

La présence d'un ou plusieurs des éléments choisis parmi le germanium, l'étain et l'antimoine permet de limiter le phénomène de gonflement. De ce fait, ces aciers peuvent être utilisés dans les réacteurs nucléaires.

FIG. 5

# ACIER INOXYDABLE AUSTENITIQUE UTILISABLE EN PARTICULIER COMME MATERIAU DE STRUCTURE DE COEUR OU DE GAINAGE DANS LES REACTEURS NUCLEAIRES

La présente invention a pour objet un acier inoxydable austénitique à base de chrome, de nickel et de molybdène.

De façon plus précise, elle concerne des compositions d'acier inoxydables austénitiques utilisables dans les réacteurs nucléaires tels que les réacteurs à neutrons rapides, notamment comme matériau de structure de coeur ou de gainage d'éléments combustibles, ayant une meilleure résistance au gonflement sous irradiation que les aciers utilisés actuellement, par exemple les aciers du type 316. On peut également les utiliser dans les réacteurs à fusion.

Actuellement, le taux de combustion des éléments combustibles des réacteurs nucléaires est principalement limité par le gonflement des gaines contenant le combustible nucléaire et des tubes hexagonaux renfermant les aiguilles combustibles. Ce phénomène qui peut conduire à des variations dimensionnelles importantes est dû à l'agglomération en cavités d'une partie des lacunes créées dans le matériau par l'irradiation.

En effet, l'irradiation d'un matériau par des neutrons rapides, des ions ou des électrons de haute énergie produit en quantités égales des lacunes et des interstitiels et leur création s'accompagne d'une augmentation de volume. Si la température est suffisamment élevée, ces défauts, créés hors d'équilibre, ont une mobilité suffisante pour s'éliminer par recombinaison mutuelle ou par absorption ou pour s'agglomérer au contraire sous forme d'amas ; dans ce dernier cas, les lacunes peuvent s'agglomérer et donner lieu à la formation de cavités, puis à la croissance de ces cavités, ce qui provoque l'expansion volumique du matériau appelée gonflement.

Jusqu'à présent, on a tenté de limiter ce phénomène de gonflement des matériaux de gainage en ajoutant aux compositions habituelles d'alliages austénitiques des éléments tels que le silicium ou le phosphore comme il est décrit dans le brevet français FR-A-2 394 618 déposé le 13 Juin 1977 au nom du Commissariat à l'Energie Atomique.

Pour améliorer encore les performances, d'autres études ont été menées sur la possibilité d'ajouter d'autres éléments permettant de maîtriser ce phénomène de gonflement sous irradiation.

La présente invention a précisément pour objet un nouvel acier inoxydable austénitique comportant des additifs qui permettent de maîtriser le phénomène de gonflement sous irradiation en agissant de façon différente.

Cet acier inoxydable austénitique résistant au gonflement sous irradiation par des électrons, des neutrons et/ou des ions, se caractérise en ce qu'il comprend au moins un élément additionnel choisi parmi l'étain, le germanium et l'antimoine à une teneur totale allant de 0,05 % en poids à 1 % en poids.

De façon plus précise, l'acier inoxydable austénitique selon l'invention comprend en poids :
- 10 à 28 % de nickel,
- jusqu'à 3 % de molybdène,
- 8 à 18 % de chrome,
- jusqu'à 0,12 % de carbone,
- jusqu'à 2 % de manganèse,
- jusqu'à 1 % de silicium,
- de 0 à 0,65 % de titane,
- de 0 à 0,008 % de bore,
- de 0,05 à 1 % au total d'au moins un élément choisi parmi l'étain, le germanium et l'antimoine, le reste étant constitué par du fer et des impuretés accidentelles.

A titre d'impuretés accidentelles, on peut citer par exemple l'aluminium, le cuivre, l'azote, le soufre, le phosphore, l'oxygène et l'hydrogène que l'on trouve généralement à l'état de traces dans les aciers de ce type.

Dans l'acier inoxydable de l'invention, l'addition de germanium, d'étain et/ou d'antimoine permet d'améliorer le comportement sous irradiation des aciers. Selon l'invention, on peut ajouter ces éléments simultanément à condition bien entendu que leur teneur totale soit située dans la gamme allant de 0,05 à 1 % en poids de l'acier ; toutefois, on utilise plutôt un seul de ces éléments pour obtenir l'effet voulu. Comme on le verra plus loin, la présence de ces éléments a notamment pour effet de limiter la croissance des cavités formées dans l'acier par irradiation, ce qui n'était pas obtenu avec les éléments ajoutés jusqu'à présent.

De préférence, selon l'invention, la teneur totale en éléments choisis parmi le germanium, l'étain et l'antimoine est d'au plus 0,5 % en poids. En effet, cette teneur est généralement suffisante pour améliorer fortement la résistance au gonflement des aciers.

Selon un premier mode de réalisation de l'invention, l'acier inoxydable de base est un acier Z8CND17-12 (spécification AFNOR) auquel on ajoute selon l'invention du germanium, de l'étain et/ou de l'antimoine, et éventuellement du titane. Dans ce cas, l'acier comprend en poids 10 à 14 % de nickel, 2 à 3 % de molybdène, 16 à 18 % de chrome, jusqu'à 0,1 % de carbone, jusqu'à 2 % de manganèse, jusqu'à 1 % de silicium, de 0 à 0,65

% de titane, de 0,05 à 1 % au total d'au moins un élément choisi parmi l'étain, le germanium et l'antimoine, le reste étant constitué par du fer et des impuretés accidentelles.

Avec des aciers de ce type, on limite généralement l'addition d'étain, de germanium et/ou d'antimoine à 0,5 % en poids comme on l'a vu précédemment. Par ailleurs, il est préférable que ces aciers comprennent de 0,1 à 0,65 %, et mieux encore de 0,1 à 0,45 % en poids de titane.

Selon un deuxième mode de réalisation de l'invention, l'acier de base correspond aux aciers du type 15-15 dont la matrice est formée de 15 % en poids de nickel et 15 % en poids de chrome.

Dans ce cas, l'acier comprend en poids 14 à 16 % de nickel, 1 à 3 % de molybdène, 14 à 16 % de chrome, jusqu'à 0,12 % de carbone, jusqu'à 2 % de manganèse, jusqu'à 1 % de silicium, de 0 à 0,008 % de bore, de 0 à 0,65 % de titane, de 0,05 à 1 % au total d'au moins un élément choisi parmi l'étain, le germanium et l'antimoine, le reste étant constitué par du fer et des impuretés accidentelles.

Selon un troisième mode de réalisation de l'invention, l'acier de base est un acier dont la matrice comprend 10 % de chrome et 25 % de nickel. Dans ce cas, l'acier comprend 23 à 28 % de nickel, 1 à 3 % de molybdène, 8 à 13 % de chrome, jusqu'à 0,12 % de carbone, jusqu'à 2 % de manganèse, jusqu'à 1 % de silicium, de 0 à 0,65 % de titane, de 0 à 0,008 % de bore, de 0,05 à 1 % au total d'au moins un élément choisi parmi l'étain, le germanium et l'antimoine, le reste étant constitué par du fer et des impuretés accidentelles.

Dans tous les modes de réalisation de l'invention, il est préférable que l'alliage comprenne les éléments d'addition suivants : carbone, manganèse, silicium, dans les gammes préférentielles indiquées ci-après : 1 à 2 % de manganèse, 0,2 à 1 % de silicium et 0,02 à 0,12 % en poids de carbone, de préférence 0,08 à 0,12 % en poids dans le cas des aciers du type 15-15.

En effet, ces éléments additionnels ont un effet généralement bénéfique sur les propriétés mécaniques des alliages.

En ce qui concerne les éléments additionnels choisis parmi le germanium, l'étain et l'antimoine, leur teneur totale est généralement limitée à 0,5 % en poids comme on l'a vu précédemment. Par ailleurs, on préfère n'ajouter qu'un seul de ces éléments, par exemple l'étain.

Les aciers de l'invention peuvent être élaborés par tout procédé connu, par exemple par fusion au four électrique, au four à arc, ou au four à induction. L'acier peut ensuite être soumis à un traitement thermique, par exemple à un traitement d'hypertrempe effectué par exemple à une température supérieure à 1000°C sous atmosphère d'argon. On peut ensuite soumettre l'acier à un écrouissage, par exemple à un laminage.

D'autres caractéristiques et avantages de l'invention apparaîtront mieux à la lecture de la description qui suit donnée bien entendu à titre illustratif et non limitatif en référence aux dessins annexés sur lesquels :

-les figures 1, 2, 3 et 4 sont des micrographies se rapportant respectivement à un acier inoxydable austénitique du type Z8CND17-12 sans additif (fig. 1) et à des aciers inoxydables du type Z8CND17-12 modifiés par addition de 0,3 % en poids de germanium (fig. 2), 0,5 % en poids d'étain (fig. 3), et 0,5 % en poids d'antimoine (fig. 4).

La figure 5 est un diagramme représentant l'évolution du gonflement, à 500 °C, en fonction de la dose d'irradiation pour différents aciers inoxydables austénitiques de l'invention,

la figure 6 est un diagramme representant l'évolution du gonflement à 550°C en fonction de la dose d'irradiation, pour différents aciers inoxydables austénitiques de l'invention,

la figure 7 est un diagramme représentant l'évolution du volume moyen des cavités en fonction de la dose d'irradiation à une température de 500°C, pour des aciers de l'invention,

la figure 8 est un diagramme représentant · l'influence de la température sur la vitesse de gonflement sous irradiation pour un acier de l'invention,

la figure 9 est un diagramme représentant l'influence de la teneur en étain sur la vitesse de gonflement à 550°C d'aciers de l'invention,

la figure 10 est un diagramme représentant l'évolution du gonflement, à 500°C, en fonction de la dose d'irradiation pour différents aciers inoxydables de l'invention, et

la figure 11 est une vue en coupe longitudinale représentant les parties haute et basse d'un assemblage combustible pour réacteur à neutrons rapides.

La description qui suit illustre les résultats obtenus en modifiant des aciers du type Z8CND17-12 ou des aciers Fe-15 Cr-20 Ni par addition de germanium, d'étain ou d'antimoine.

Les alliages du type Z8 CND 17-12 sont préparés par fusion dans un four à arc sous pression résiduelle d'argon. Ils sont ensuite soumis à un traitement d'homogénéisation à 1250°C pendant 5 heures, puis à un laminage à chaud à 1150°C en plusieurs passes amenant l'épaisseur des tôles à 2 mm. Cette opération est suivie d'un décapage chimique, d'un laminage à froid amenant l'épaisseur des tôles à 1,25 mm puis d'une hypertrempe à 1100°C et d'un écrouissage final de 20 % effectué par laminage à froid. On obtient ainsi des tôles ayant une épaisseur de 1 mm.

Les aciers du type Fe-15 Cr-20 Ni sont préparés par fusion dans un four à induction à partir des éléments Fe, Cr, Ni et de l'élément d'addition. Ils ont été ensuite laminés puis hypertrempés depuis 1300 °C.

Pour vérifier ensuite les propriétés des aciers sous irradiation, on découpe des plaquettes de 2 cm $\times$ 2 cm dans les tôles obtenues, puis on les place dans une nacelle sous argon pendant 10 minutes à une température de 1150°C. On réalise alors la trempe en retirant la nacelle de la zone chaude du four, le flux d'argon assurant un refroidissement rapide. Après hypertrempe, on amincit les matériaux par polissage mécanique jusqu'à une épaisseur de 70 μm et on découpe des disques de 3 mm de diamètre dans les plaquettes amincies. On soumet alors les disques à un polissage électrolytique réalisé dans les conditions suivantes :

-composition de l'électrolyte : alcool éthylique 70 %, éther monobutylique d'éthylène glycol 20 % et acide perchlorique 10 %,
-température du bain : 12°C, et
-intensité du courant 140 mA obtenue par une tension d'environ 22 V.

On rince ensuite soigneusement les disques minces à l'alcool puis on les sèche.

On les soumet alors à des essais d'irradiation effectués au moyen d'un faisceau d'électrons dans les conditions suivantes :
-énergie des électrons : 1 MeV,
-plages irradiées choisies dans des grains orientés suivant les plans (110),
-diamètre du faisceau : 2 μm, et
-vitesse de production des défauts ponctuels : 20 dpa.h$^{-1}$ dans la zone centrale du faisceau.

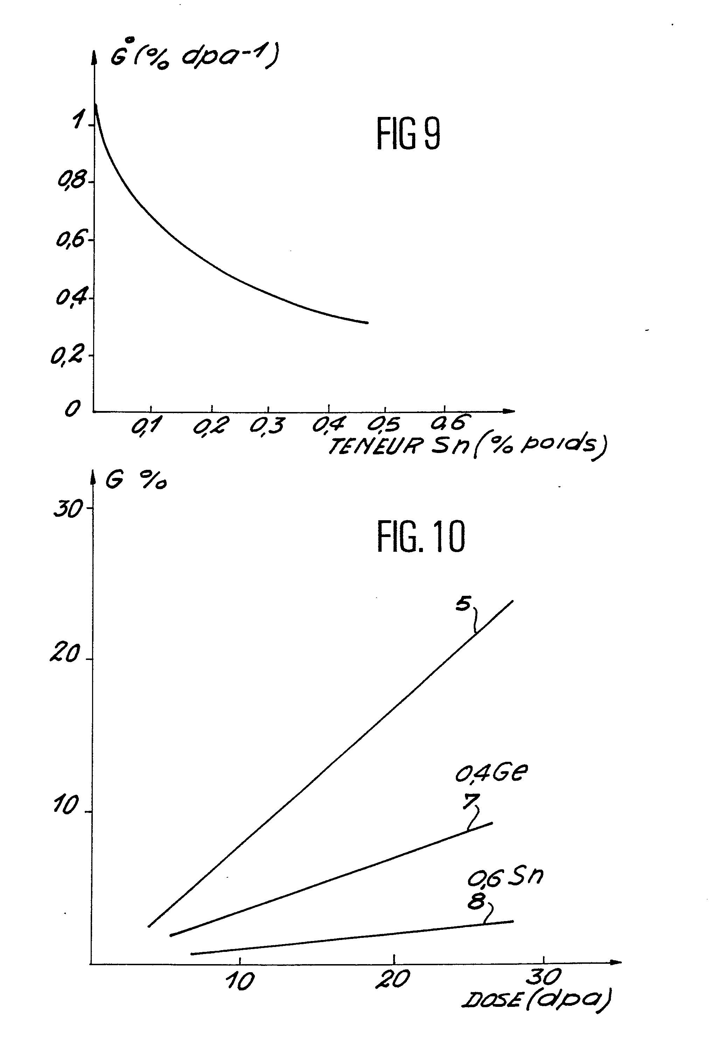

Ces conditions permettent de réaliser une simulation de l'irradiation dans des réacteurs à neutrons rapides. Les flux instantanés sont toutefois supérieurs (environ 5.10$^{-3}$dpa s$^{-1}$) à ce qu'ils sont typiquement dans un réacteur à neutrons rapides - (environ 2.10$^{-6}$ dpa s$^{-1}$), ceci devrait avoir seulement pour effet de déplacer le maximum de gonflement vers les hautes températures. Cependant, comme on le verra sur la fig. 9, le maximum de gonflement n'est que très peu déplacé puisque dans le cas de l'acier Z8 CND 17-12, il se produit à 550°C dans ces essais, ce qui correspond pratiquement à la valeur que l'on obtient dans un réacteur à neutrons rapides.

Pour réaliser ces essais, on place les disques minces dans le porte-objet chauffant d'un microscope et on irradie par un faisceau d'électrons. Des séries de micrographies prises à intervalles réguliers permettent ensuite de mesurer le gonflement en fonction de la dose d'irradiation.

Le faisceau d'électrons utilisé s'étend sur une surface d'environ 2 μm de diamètre. Le flux ne varie pratiquement pas dans la partie centrale et on peut considérer qu'il est constant sur une surface d'environ 0,8 μm de diamètre.

Ce flux d'électrons est très intense de l'ordre de 1,5.10$^{20}$ électrons.cm$^{-2}$. s.$^{-1}$. L'intensité dans la partie centrale du faisceau est proche de 10$^{-7}$ A, ce qui correspond à une vitesse de production des défauts ponctuels de l'ordre de 20 dpa h$^{-1}$ en prenant une valeur de 35 eV pour l'énergie seuil de déplacement.

On rappelle que l'unité de dose "dpa" représente le nombre de fois où un atome du réseau cristallin est en moyenne déplacé.

Pour caractériser le gonflement, on prend des micrographies de la zone irradiée tous les dpa et on détermine dans le volume de matière où le flux d'électrons est constant, le volume total occupé par les cavités. On peut ainsi en déduire le gonflement qui est donné par la formule :

$$G = \frac{\Sigma N_i V_i}{V_t}$$

dans laquelle $N_i$ est le nombre de cavités de volume $V_i$ et $V_t$ est le volume de matière contenant les cavités mesurées.

Pour chaque dose, le gonflement obtenu se décompose en deux paramètres qui sont la densité de cavités $p_c$ et le volume moyen (V), qui sont donnés par les formules suivantes :

$$p_c = \frac{\Sigma N_i}{V_t} \quad et \quad V = \frac{\Sigma N_i V_i}{\Sigma N_i}$$

Ces deux composantes essentielles du gonflement caractérisent la germination et la croissance des cavités.

On détermine l'histogramme de taille des cavités caractérisé par le terme $\Sigma N_i V_i$ à l'aide d'un analyseur de particules Zeiss qui travaille sur des images tirées au grandissement 200 000 ou 500 000.

Le deuxième paramètre qui intervient est le volume de matière contenant les cavités mesurées $V_t$ qui s'exprime par la formule :

$$V_t = \frac{\pi d^2 e}{4}$$

où d est le diamètre réel de la zone de la micrographie où l'histogramme est réalisé, et e est l'épaisseur de matière contenant les cavités mesurées, qui est déterminée par stéréoscopie.

On réalise ces essais d'irradiation à une température de 500, 550°C ou 600°C. On rappelle que la température de 500°C est comprise entre celle correspondant au flux maximum des gaines et celle correspondant au flux maximum des tubes hexagonaux dans un réacteur à neutrons rapides, en utilisant des disques constitués des aciers Nos 1 à 6 qui ont la composition donnée dans le tableau annexé.

Les alliages Nos 1 et 5 sont des alliages de référence ne comportant pas les additifs de l'invention et les alliages N os 2 à 4 et 6 à 8 sont des alliages selon l'invention.

Les résultats des essais d'irradiation sont donnés sur les figures annexées.

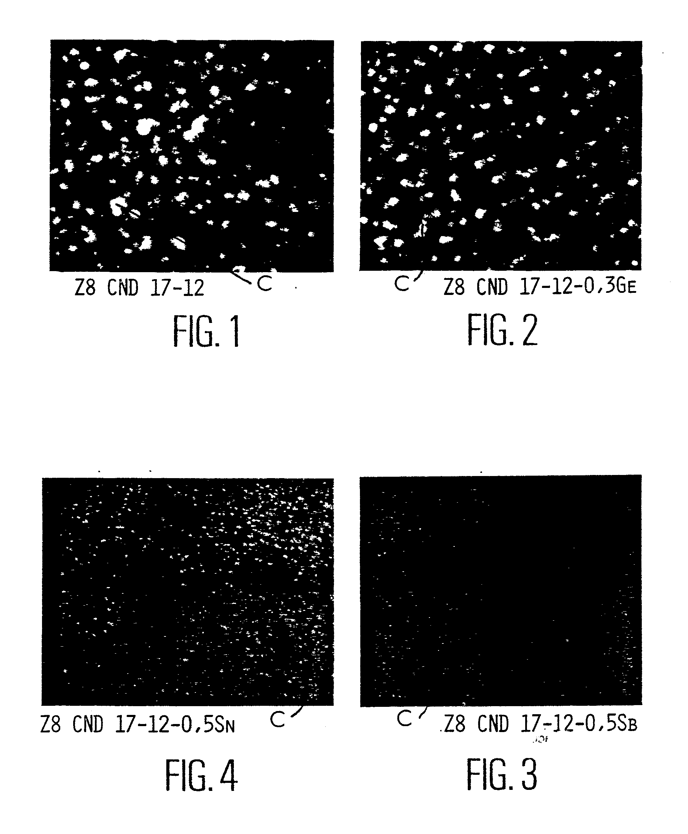

Sur ces figures, les figures 1 à 4 sont des micrographies illustrant la structure des matériaux après irradiation à 500°C pour une dose de 20 dpa.

La figure 1 se rapporte à l'acier N° 1 qui est l'acier austénitique du type Z8 CND 17-12 selon l'art antérieur, et les figures 2, 3 et 4 se rapportent respectivement aux alliages Nos 2, 3 et 4 du tableau.

Sur ces figures, on remarque que, dans le cas de l'acier austénitique de l'art antérieur, les cavités C ont des dimensions importantes, et le gonflement sous irradiation est important.

Dans le cas des figures 2, 3 et 4, si le nombre de cavités C est plus important, leurs dimensions sont en revanche nettement plus faibles, notamment dans le cas des aciers Nos 3 et 4 qui comportent respectivement des additions d'étain et d'antimoine. Ainsi, l'effet de ces éléments d'addition n'est pas de diminuer le nombre de cavités sans affecter leur croissance, mais de favoriser la germination des cavités en réduisant leur croissance. Dans le cas de l'étain et de l'antimoine, l'effet sur la réduction de croissance des cavités est très important.

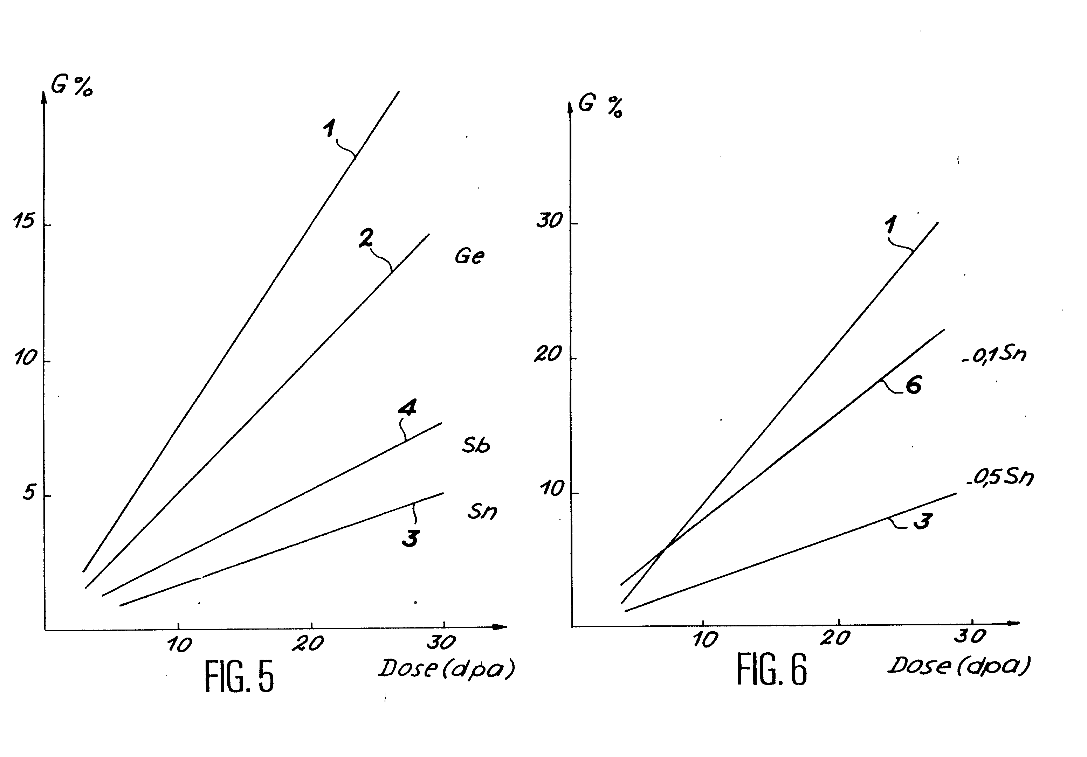

Sur la figure 5, on a représenté l'évolution du gonflement sous irradiation (en %) en fonction de la dose d'irradiation (en dpa), lorsque celle-ci est effectuée à une température de 500°C.

Sur cette figure, les droites 1, 2, 3 et 4 se rapportent respectivement aux aciers Nos 1, 2, 3 et 4.

Au vu de cette figure, on constate que le gonflement croît de façon continue tout au long de l'irradiation et qu'il est une fonction linéaire de la dose. Toutefois, ce gonflement est diminué par l'addition de germanium d'antimoine ou d'étain, et il est nettement diminué dans le cas d'une addition de 0,5 % en poids d'étain.

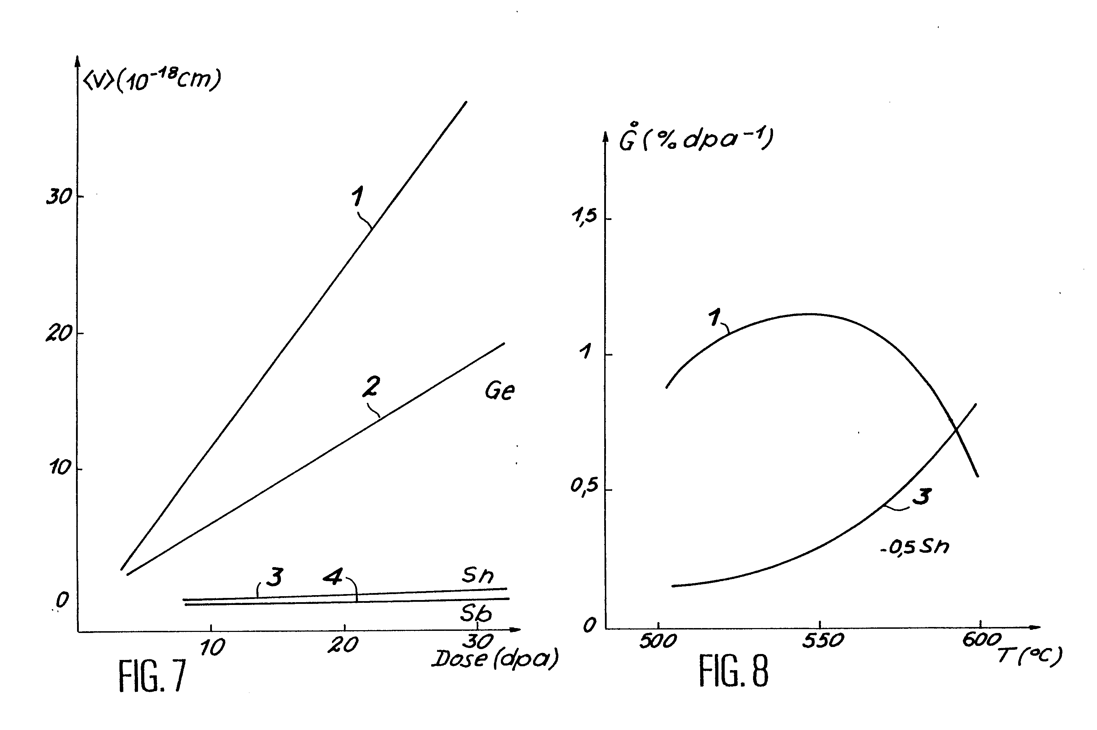

Sur la figure 6, on a représenté l'évolution du gonflement en fonction de la dose d'irradiation pour des essais effectués à une température de 550°C avec les alliages Nos 3 et 6 qui ont des teneurs différentes en étain.

Au vu de cette figure, on constate que l'effet de limitation du gonflement augmente avec la teneur en étain de l'alliage.

Sur la figure 7, on a représenté l'évolution du volume moyen des cavités en fonction de la dose d'irradiation pour des essais effectués à 500°C sur les alliages Nos 1 à 4. Au vu de cette figure, on constate que le volume moyen des cavités ne croît pratiquement pas dans le cas des alliages Nos 3 et 4 qui comportent des additions d'étain et d'antimoine.

La figure 8 illustre l'influence de la température sur la vitesse de gonflement des alliages, exprimée en pourcentages du gonflement par dpa, pour l'acier n° 1 et l'acier n° 3 dans le cas d'essais réalisés à des températures allant de 500 à 600°C.

Comme on peut le voir sur cette figure, la vitesse de gonflement est une courbe qui passe par un maximum dans le cas de l'acier n° 1 où ce maximum correspond à une température de 550°C qui est proche de celui que l'on obtient dans un réacteur à neutrons rapides. En revanche, dans le cas de l'acier n° 3, le maximum de gonflement est obtenu pour des températures supérieures à 600°C ; de ce fait, dans l'intervalle de températures de 550 à 600°C, l'effet de l'étain sur la vitesse de gonflement est moins important.

Pour remédier à cet inconvénient, il suffit d'utiliser un acier contenant simultanément de l'étain et du titane, car le titane a un effet stabilisant en supprimant la germination des cavités.

La figure 9 illustre l'influence de la teneur en étain sur la vitesse de gonflement (en % dpa$^{-1}$) d'un acier du type Z8CND17-12 ayant des additions d'étain variant de 0 à 0,5% en poids, pour des essais réalisés à une température de 550 °C.

Au vu de cette figure, on constate que la vitesse de gonflement décroît en fonction de la teneur en étain. On suppose que cette diminution est essentiellement due, là encore à un fort effet de l'étain sur la croissance des cavités.

Sur la figure 10, on a représenté l'évolution du gonflement sous irradiation à 500°C (en %) en fonction de la dose d'irradiation (en dpa) pour les aciers du type Fe-15Cr-20Ni comportant des additions de germanium et d'étain.

Sur cette figure, les droites 5, 7 et 8 se rapportent respectivement aux aciers n° 5, 7 et 8 du tableau.

Au vu de cette figure, on constate que le gonflement est diminué par l'addition de germanium ou d'étain, en particulier par l'addition de 0,6% en poids d'étain.

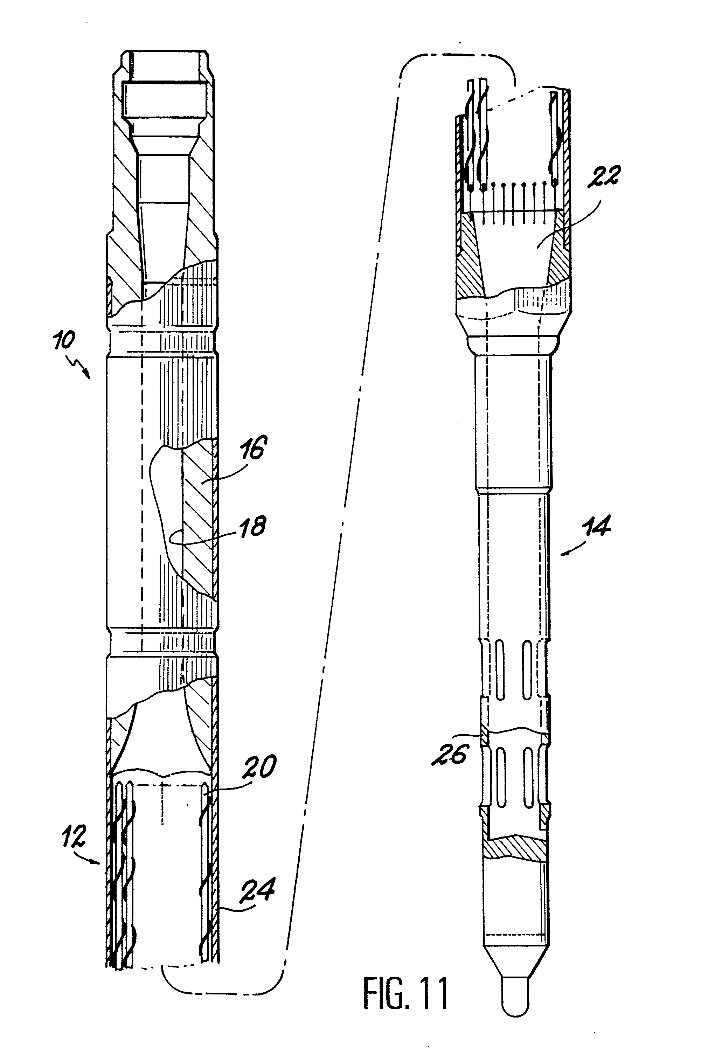

Sur la figure 11, on a représenté un assemblage combustible destiné à être utilisé dans un réacteur nucléaire à neutrons rapides. Cet assemblage se compose principalement en partant du haut d'une protection neutronique supérieure 10, d'une partie fissile 12 et d'un pied 14.

La protection neutronique supérieure 10 est constituée par un bloc d'acier annulaire 16 percé suivant l'axe vertical de l'assemblage d'un passage 18 par lequel le sodium réchauffé par son passage dans la partie fissile 12 sort de l'assemblage.

La partie fissile 12 comprend un faisceau d'aiguilles combustibles 20 fixées par leur extrémité inférieure sur une grille d'accrochage 22. Le faisceau est logé dans un tube hexagonal 24.

Le pied 14 de l'assemblage comprend un tube cylindrique 26 de diamètre réduit par rapport à la section du tube hexagonal 24.

Selon l'invention, on réalise les gaines des aiguilles combustibles 20 et/ou le tube hexagonal 24 dans lequel est logé le faisceau d'aiguilles combustibles, en l'un des aciers inoxydables de l'invention dont la résistance au gonflement sous irradiation a été améliorée par addition d'au moins un élément choisi parmi l'étain, le germanium et l'antimoine.

T A B L E A U

| Acier | n°1 | n°2 | n°3 | n°4 | n°5 | n°6 | n°7 | n°8 |
|-------|-----|-----|-----|-----|-----|-----|-----|-----|
| Cr | 16,8 | 16,8 | 16,8 | 16,8 | 15,4 | 16,8 | 14,9 | 15 |
| Ni | 13,2 | 13,2 | 13,2 | 13,2 | 20,2 | 13,2 | 20,1 | 20,3 |
| Mn | 1,4 | 1,4 | 1,4 | 1,4 | | 1,4 | | |
| Mo | 2,12 | 2,2 | 2,05 | 2,1 | – | 2,1 | – | – |
| C | 0,054 | 0,057 | 0,054 | 0,057 | 0,005 | 0,057 | 0,005 | 0,005 |
| Si | 0,55 | 0,49 | 0,56 | 0,49 | – | 0,49 | – | – |
| Ge | – | 0,3 | – | – | – | – | 0,4 | – |
| Sn | – | – | 0,5 | – | – | 0,1 | – | 0,6 |
| Sb | – | – | – | 0,5 | – | – | – | – |
| Fe | reste | reste | reste | reste | reste | reste | reste | reste |

0 233 426

## Revendications

1. Acier inoxydable austénitique résistant au gonflement sous irradiation par des électrons, des neutrons et/ou des ions, caractérisé en ce qu'il comprend au moins un élément additionnel choisi parmi l'étain et le germanium, à une teneur totale allant de 0,05% en poids à 1% en poids.

2. Acier inoxydable austénitique selon la revendication 1, caractérisé en ce qu'il comprend en poids : à 28% de nickel, jusqu'à 3% de molybdène, 8 à 18% de chrome, jusqu'à 0,12% de carbone, jusqu'à 2% de manganèse, jusqu'à 1% de silicium, de 0, à 0,65% de titane, de 0 à 0,008% de bore, de 0,05 à 1% au total d'au moins un élément choisi parmi l'étain et le germanium, le reste étant constitué par du fer et des impuretés accidentelles.

3. Acier inoxydable austénitique selon la revendication 2, caractérisé en ce qu'il comprend en poids 10 à 14% de nickel, 2 à 3% de molybdène, 16 à 18% de chrome, jusqu'à 0,1% de carbone, jusqu'à 2% de manganèse, jusqu'à 1% de silicium, de 0 à 0,65% de titane, de 0,05 à 1% au total d'au moins un élément choisi parmi l'étain et le germanium, le reste étant constitué par du fer et des impuretés accidentelles.

4. Acier inoxydable selon la revendication 3, caractérisé en ce qu'il comprend de 0,10% à 0,45% en poids de titane.

5. Acier inoxydable austénitique selon la revendication 2, caractérisé en ce qu'il comprend en poids 14 à 16% de nickel, 1 à 3% de molybdène, 14 à 16% de chrome, jusqu'à 0,12% de carbone, jusqu'à 2% de manganèse, jusqu'à 1% de silicium, de 0 à 0,008% de bore, de 0 à 0,65% de titane, de 0,05 à 1% au total d'au moins un élément choisi parmi l'étain et le germanium, le reste étant constitué par du fer et des impuretés accidentelles.

6. Acier inoxydable austénitique selon la revendication 2, caractérisé en ce qu'il comprend 23 à 28% de nickel, 1 à 3% de molybdène, 8 à 13% de chrome, jusqu'à 0,12% de carbone, jusqu'à 2% de manganèse, jusqu'à 1% de silicium, de 0 à 0,65% de titane, de 0 à 0,008% de bore, de 0,05% à 1% au total d'au moins un élément choisi parmi l'étain et le germanium, le reste étant constitué par du fer et des impuretés accidentelles.

7. Acier selon l'une quelconque des revendications 1 à 6, caractérisé en ce qu'il comprend un seul élément choisi parmi l'étain et le germanium.

8. Acier selon la revendication 7, caractérisé en ce que ledit élément est l'étain.

9. Matériau de structure de coeur ou de gainage d'éléments combustibles pour réacteurs nucléaires, caractérisé en ce qu'il est constitué par un acier inoxydable austénitique comprenant au moins un élément additionnel choisi parmi l'étain, le germanium et l'antimoine à une teneur totale allant de 0,05 % en poids à 1 % en poids.

10. Matériau selon la revendication 9, caractérisé en ce que l'acier inoxydable austénitique comprend en poids : 10 à 28 % de nickel, jusqu'à 3 % de molybdène, 8 à 18% de chrome, jusqu'à 0,12% de carbone, jusqu'à 2% de manganèse, jusqu'à 1% de silicium, de 0 à 0,65% de titane, de 0 à 0,008% de bore, de 0,05 à 1% au total d'au moins un élément choisi parmi l'étain, le germanium et l'antimoine, le reste étant constitué par du fer et des impuretés accidentelles.

11. Matériau selon la revendication 10, caractérisé en ce que l'acier inoxydable austénitique comprend en poids 10 à 14% de nickel, 2 à 3% de molybdène, 16 à 18% de chrome, jusqu'à 0,1 % de carbone, jusqu'à 2% de manganèse, jusqu'à 1% de silicium, de 0 à 0,65% de titane, de 0,05 à 1% au total d'au moins un élément choisi parmi l'étain, le germanium et l'antimoine, le reste étant constitué par du fer et des impuretés accidentelles.

12. Matériau selon la revendication 11, caractérisé en ce que l'acier inoxydable comprend de 0,10 % à 0,45 % en poids de titane.

13. Matériau selon la revendication 10, caractérisé en ce que l'acier inoxydable austénitique comprend en poids 14 à 16 % de nickel, 1 à 3 % de molybdène, 14 à 16 % de chrome, jusqu'à 0,12 % de carbone, jusqu'à 2 % de manganèse, jusqu'à 1 % de silicium, de 0 à 0,008 % de bore, de 0 à 0,65 % de titane, de 0,05 à 1 % au total d'au moins un élément choisi parmi l'étain, le germanium et l'antimoine, le reste étant constitué par du fer et des impuretés accidentelles.

14. Matériau selon la revendication 10, caractérisé en ce que l'acier inoxydable austénitique comprend 23 à 28 % de nickel, 1 à 3 % de molybdène, 8 à 13 % de chrome, jusqu'à 0,12 % de carbone, jusqu'à 2 % de manganèse, jusqu'à 1 % de silicum, de 0 à 0,65 % de titane, de 0 à 0,008 % de bore, de 0,05 à 1 % au total d'au moins un élément choisi parmi l'étain, le germanium et l'antimoine, le reste étant constitué par du fer et des impuretés accidentelles.

15. Matériau selon l'une quelconque des revendications 9 à 14, caractérisé en ce que l'acier inoxydable austénitique comprend un seul élément choisi parmi l'étain, le germanium et l'antimoine.

16. Matériau selon la revendication 15, caractérisé en ce que ledit élément est l'étain.

Z8 CND 17-12          C

## FIG. 1

C          Z8 CND 17-12-0,3Gᴇ

## FIG. 2

Z8 CND 17-12-0,5Sɴ          C

## FIG. 4

C          Z8 CND 17-12-0,5Sв

## FIG. 3

FIG. 5

FIG. 6

0 233 426

FIG.7

FIG.8

FIG 9

FIG. 10

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 318 237  (UNITED STATES ENERGY RESEARCH AND DEVELOPMENT ADMINISTRATION) * Revendications 1,7 *  &  US-A-4 011  133,  GB-A-1 555 778, DE-A-2 631 954 | 1,9 | C 22 C   38/44 C 22 C   38/60 G 21 C    3/06 |
| A,D | FR-A-2 394 618  (COMMISSARIAT A L'ENERGIE ATOMIQUE) * Revendications 1-4 *  &  GB-A-1 599 617, BE-A-867 893 | 1,9 | |
| A | GB-A-  563 765  (ELECTRO METALLURGICAL CO.) *  Revendications  1-5;  page  1, ligne 80 - page 2, ligne 40 * | 9 | |
| A | DE-C-  897 423  (UDDEHOLMS AKTIEBOLAG) *  Revendications  1,2;  page  2, lignes 36-48; page 2, ligne 111 - page 3, ligne 66 * | 9 | **DOMAINES TECHNIQUES RECHERCHES (Int. Cl.4)** C 22 C   38 G 21 C    3/06 |

Le présent rapport de recherche a été établi pour toutes les revendications

| Lieu de la recherche | Date d'achèvement de la recherche | Examinateur |
|---|---|---|
| LA HAYE | 31-03-1987 | LIPPENS M.H. |